# EUROPÄISCHE PATENTSCHRIFT

(11) **EP 2 552 774 B1**
(45) Veröffentlichungstag und Bekanntmachung des Hinweises auf die Patenterteilung: **04.03.2015**
(21) Anmeldenummer: 11720015.4
(22) Anmeldetag: 24.03.2011
(51) Int. Cl.: B64C 1/18, B64C 1/06

(54) **WANDBAUTEIL FÜR EIN LUFTFAHRZEUG**
WALL COMPONENT FOR AN AIRCRAFT
STRUCTURE DE PAROI POUR UN AÉRONEF

(30) Priorität: 30.03.2010 DE 102010013370
(43) Veröffentlichungstag der Anmeldung: 06.02.2013
(73) Patentinhaber: Airbus Operations GmbH, 21129 Hamburg (DE)
(72) Erfinder: ENDRES, Gregor Christian, 85276 Pfaffenhofen (DE); WEBER, Hans-Jürgen, 27283 Verden (DE)
(74) Vertreter: Maiwald Patentanwalts GmbH
(86) Internationale Anmeldenummer: PCT/DE2011/000311
(87) Internationale Veröffentlichungsnummer: WO 2011/120503

(56) Entgegenhaltungen:
- EP-A1- 1 719 698
- FR-A1- 2 922 518
- JP-A- 2006 281 664

## Beschreibung

Die Erfindung betrifft ein Wandbauteil für ein Luftfahrzeug zum Bilden einer Außenwandung mit wenigstens einem ersten Wandelement, wenigstens einem zweiten Wandelement und wenigstens einer Verbindungseinrichtung zum Verbinden des ersten Wandelements mit dem zweiten Wandelement. Weiter betrifft die Erfindung einen Luftfahrzeugrumpf mit einem solchen Wandbauteil und ein Verfahren zum Verbinden der Wandelemente sowie ein Montageverfahren eines Inneneinrichtungselements an dem Luftfahrzeugrumpf.

In einem Flugzeug als Beispiel für ein Luftfahrzeug ist der Rumpf neben den Flügeln eines der großen primären Strukturbauteile. Abgesehen von wenigen Sektionen ist er eine einfache Röhre mit in weiten Teilen gleichbleibendem Durchmesser.

Bei Luftfahrzeugen, insbesondere bei Großraumflugzeugen, die sich heute im Einsatz befinden, sind im Rumpf ausschließlich metallische Verbundwerkstoffe verbaut. Dabei werden einzelne Rumpftonnen aus vorgeformten Schalen zusammengebaut. Die Fügung der Rumpfschalen erfolgt über Nieten. Zur Versteifung werden Verstärkungseinrichtungen (Spanten) und Einrichtungen zum Verbinden der Verstärkungseinrichtungen (Stringer) auf der Rumpfinnenseite durch Kleben und/oder Nieten angebracht.

Es besteht der Trend, dass als Primärstruktur im Rumpf zukünftig Verbundwerkstoffe, insbesondere Faserverbundmaterialien, zum Einsatz kommen. Diese Materialien bestehen im Allgemeinen aus zwei Hauptkomponenten, einer bettenden Matrix sowie verstärkenden Fasern. Faserverbundmaterialien haben eine hohe spezifische Festigkeit, d. h. ein hohes Verhältnis aus Festigkeit und Gewicht. Somit sind Bauteile aus diesen Materialien leichter und zeigen dennoch gleiche oder sogar bessere Eigenschaften als die entsprechenden, bisher verwendeten Metallwerkstoffe.

Faserverbundmaterial hat den Vorteil, dass es eine hohe spezifische Festigkeit aufweist, d. h. bei einer hohen Festigkeit hat es gleichzeitig ein sehr geringes Gewicht.

Faserverbundmaterialien unterscheiden sich in verschiedenen Aspekten stark von Metallen:
Faserverbunde bestehen aus verschiedenen Schichten, die entweder in einem Laminierprozess (Prepreg) oder in einem Infusionsprozess zu einem Verbund aufgebaut werden. Dabei kommt es beim Härtungsprozess zu mehr oder weniger starken Setzprozessen, die eine Veränderung in der Dicke und bei gekrümmten Bauteilen auch eine relative Verschiebung der Schichten zueinander zur Folge hat.

Die Eigenschaften der Faserverbunde entstehen unter anderem aus einem möglichst ungestörten Faserverlauf. Faserunterbrechungen müssen also möglichst gering gehalten werden, um die Werkstoffeigenschaften optimal ausnutzen zu können.

Je nach eingesetzten Werkstoffen (Textile, Prepregs) bzw. Verarbeitungsverfahren sind sehr aufwändige Werkzeuge und zeitintensive Fertigungsprozesse erforderlich.

Eine Bearbeitung von Faserverbundmaterial-Bauteilen ist aufgrund der erforderlichen Werkzeuge sehr kostenintensiv.

Der Schichtenaufbau hat im Gegensatz zum metallischen Hautfeld die Eigenschaft, dass er unter Belastung von außen delaminieren kann, was aufwändige Reparaturen zur Folge hat.

Aufgrund der Leichtigkeit und der maßgeschneidert anpassbaren Kraftverläufe bleibt Faserverbundwerkstoff trotzdem das Material erster Wahl im zukünftigen Luftfahrzeugbau.

Bei der Aufstellung neuer kosteneffizienter Fertigungs- und Montagekonzepte sollte das Gesamtkonzept werkstoffgerecht realisiert sein. Weiterhin sollte die Prozesssicherheit bei den Herstellungsverfahren für die (Groß-)Komponenten gewährleistet sein. Die Reparatur schadhafter Bauteile ist nicht nur hinsichtlich der Kosten aufwändig. Gerade im Verbundwerkstoffbereich sind die Herstellungsprozesse relativ zeitaufwändig. Je nach Produktionszahl müssen fehlerhafte Bauteile bzw. Ausschuss so berücksichtigt werden, dass es zu keinen Produktionsverzögerungen kommt. Das kann je nach Bauteil und Baugröße einen erheblichen finanziellen Mehraufwand bedeuten. Das Konzept für die Endmontage aller Bauteile sollte gerade bei großen Stückzahlen einfach sein, da hier ein großer Anteil an der Gesamtfertigungszeit festgelegt wird.

Das erste Luftfahrzeug mit einem Rumpf aus Faserverbundmaterial, die Boeing 787, ist aus mehreren gewickelten Rumpftonnen aufgebaut, die im Wickelverfahren ohne Faserunterbrechung in einem Stück gefertigt werden. Anschließend werden sie zusammengefügt. Bei dieser Art der Fertigung wird ein aufwändiger Innenkern als Werkzeug eingesetzt. Hinsichtlich des Faserverlaufs ist dieses Verfahren sehr gut, da keine Unterbrechungen zwingend erforderlich sind.

Es ergeben sich aber auch zwei Nachteile. Zum einen bedarf ein Flugzeug einer sehr maßhaltigen Außengeometrie, um die Aerodynamik der Oberfläche nicht zu stören. Dazu wäre ein Innenwerkzeug ideal. Bei Wickelverfahren ist dies aber nicht anwendbar, so dass bei der Aushärtung zusätzliche aufwändige Verfahren zum Einsatz kommen, die die Maßhaltigkeit der Außenhaut garantieren. Außerdem ergibt es sich zwangsläufig, dass die Fasern mit zunehmender Lagenzahl länger werden. Bei einem Setzvorgang, wie er beim Härten von Faserverbundmaterialien auftritt, führt dies zwangsläufig zu einem Faserüberschuss in den äußeren Lagen. Dadurch entstehen Ondulationen in den Faserschichten.

Beim Einsatz eines Innenwerkzeugs ist die Außenhaut absolut maßhaltig. Hier ergibt sich aber die Schwierigkeit, dass die inneren Faserlagen (d. h. die zum Rumpfzentrum hin) in einer in sich geschlossenen Rumpftonne kürzer werden. Bei Temperaturbeaufschlagung können diese sich nicht setzen, was wiederum zwangsläufig zu Fertigungsfehlern führt.

Beide Herangehensweisen, sowohl mit Innen- als auch mit Außenwerkzeug, sind hinsichtlich der Faserverarbeitung optimal, da keine Faserunterbrechungen vorliegen, können aber zu beschriebenen Problemen führen.

Bei einem Luftfahrzeug ist insbesondere die Aerodynamik der Oberfläche besonders wichtig. Dazu sollte die Außengeometrie des Rumpfes sehr maßhaltig sein, d. h. das Ist-Maß soll innerhalb einer sehr geringen Toleranz von dem NennMaß liegen. Bei gewickelten Rumpftonnen ist es sehr aufwändig und teuer, eine maßhaltige Außengeometrie zu erhalten.

Beispielsweise wird daher im Airbus A350 XWB eine vollständig andere Herangehensweise zur Bildung eines Luftfahrzeugrumpfes aus Faserverbundmaterialien gewählt. Der Rumpf wird hier nicht in einem Wickelverfahren hergestellt, sondern es werden Schalen gefertigt, die über in Bohrungen eingefügten Nieten miteinander verbunden werden. Die dafür erforderlichen Bohrungen sind jedoch aufwändig in der Fertigung in die Schalenbauteile einzubringen und schwächen außerdem durch die resultierenden Faserunterbrechungen das Faserverbundmaterial.

Der Rumpf wird aus einzelnen Schalen zusammengefügt. Diese Schalen lassen sich mit großer Sicherheit fertigen, da sie nicht in sich geschlossen sind. Die Bauweise ist aber weniger werkstoffgerecht und der Zusammenbau ist vergleichbar aufwändig zu demjenigen bei Metallen. Für das Fügen werden auch hier eine große Anzahl von Nieten eingesetzt. Die dafür erforderlichen Bohrungen sind nicht nur aufwändig in der Fertigung, sondern sie schwächen auch den Werkstoff durch Faserunterbrechungen.

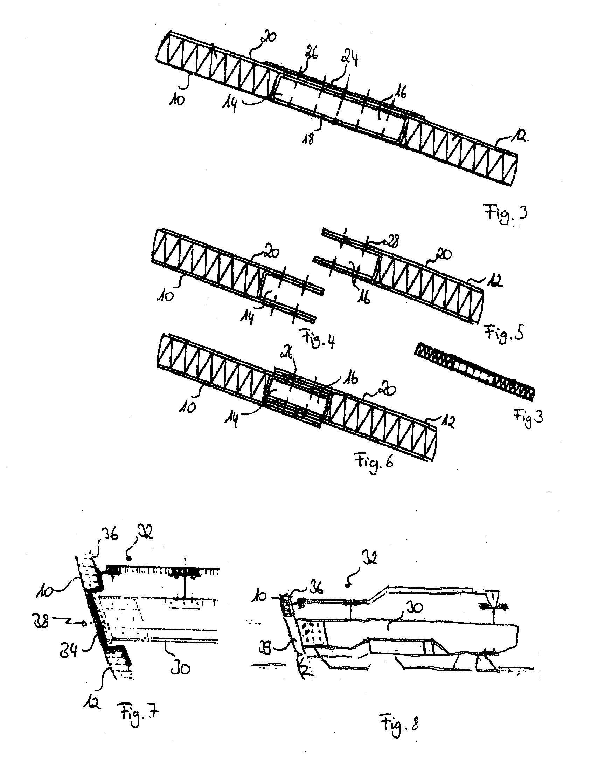

Eine Vereinfachung der Fertigung und Montage bietet daher das Konzept eines Doppelschalers. Hier wird die äußere Haut flächig mit einer leichten und hohen Kernstruktur unterstützt und rückseitig wird eine zweite Haut aufgebracht. Beispiele für einen solchen Aufbau können den Fig. 3 bis Fig. 8 entnommen werden. Es ist möglich, die Vielzahl von Schalen durch wenige große Segmente zu ersetzen.

Die Verbindung der Segmente erfolgt dann hauptsächlich in der Längsrichtung des Rumpfes, wobei Längsnähte entstehen. Es werden in der Entwicklung unterschiedliche Ansätze diskutiert, wie die Segmente miteinander verbunden werden können.

In Fig. 3 ist ein erster diskutierter Ansatz dafür gezeigt, wie zwei Segmente miteinander verbunden werden können. Dabei ist ein erstes Segment 10 und ein zweites Segment 12 als U-Profil mit Aussparungen 14, 16 ausgeführt. Zur Verbindung wird in die Aussparungen 14, 16 der U-Profile ein Vollprofil 18 eingelegt. Durch Befestigung des Vollprofils 18 an einem auf einer Außenhaut 20 der Segmente 10, 12 aufgelegten Verbindungselement 24 mittels Nieten 26 werden das erste Segment 10 und das zweite Segment 12 miteinander verbunden. Ein Überlapp der beiden zu verbindenden Segmente 10, 12 wird vermieden.

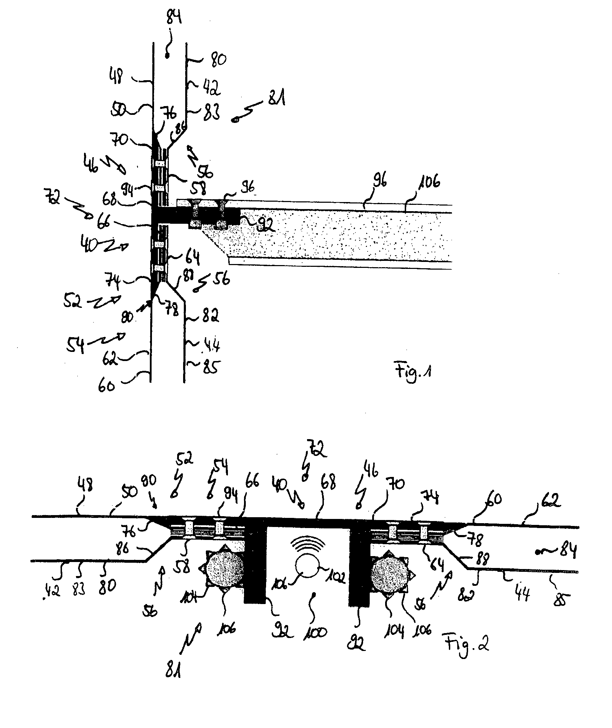

Die Fig. 4 bis 6 zeigen einen zweiten diskutierten Ansatz zur Verbindung des ersten Segments 10 in Fig. 2 mit dem zweiten Segment 12 in Fig. 3. Die beiden zu verbindenden Segmente 10, 12 werden ineinander gesteckt und an übereinander liegenden Nietbohrungen 28 über Nieten 26 verbunden. Dieses Ineinanderstecken führt automatisch zu einer äußerlichen Unebenheit, was aerodynamische Nachteile mit sich bringt. Im Vergleich dazu ist neben Fig. 6 noch einmal das äußere Profil von Fig. 3 dargestellt, um zu zeigen, dass die Außenhaut 20 bei dem Verbindungsansatz nach Fig. 3 keine Erhebungen aufweist, während die Außenhaut bei Verbindung nach dem Ansatz gemäß Fig. 6 eine Stufe in der Außenhaut 20 bildet.

Weiter müssen zur Befestigung von beispielsweise Fußbodengestellen 30 im Inneren 32 des Rumpfes zusätzliche Halterungen 34 an der Innenhaut.36 angebracht werden. Dies ist in den Fig. 7 und Fig. 8 dargestellt. Entweder werden die Halterungen 34, wie in Fig. 7 dargestellt, direkt an der Verbindungsstelle 38 der Segmente 10, 12 am Rumpf fixiert, oder die Segmente 10, 12 haben an den entsprechenden Stellen Aussparungen 39, in die eine Halterung 34 eingebracht wird, um das Fußbodengestell 30 daran zu befestigen, wie dies in Fig. 8 gezeigt ist.

Alle diese Lösungen schwächen jedoch das Faserverbundmaterial und führen gleichzeitig zu einem komplizierten und teuren Montageverfahren.

EP 1 719 698 A1, JP 2006/281664 A und FR 2 922 518 A1 beschreiben jeweils zwei Wandelemente, die mithilfe einer Verbindungsvorrichtung, die sich auf der Rückseite der Wandelemente befindet, miteinander verbunden sind.

Aufgabe der Erfindung ist es, ein aus Faserverbundmaterial gebildetes

Wandbauteil für ein Luftfahrzeug mit hoher Maßhaltigkeit zu schaffen, das keine Schwächung des Faserverbundmaterials aufweist und dennoch einfach und kostengünstig in der Herstellung und Montage ist.

Die Aufgabe wird durch ein Wandbauteil mit den Merkmalen des Patentanspruches 1 gelöst.

Ein erfindungsgemäßes Verfahren zum Verbinden von Wandelementen aus Faserverbundwerkstoff zum Bilden eines Wandbauteils ist Gegenstand des Nebenanspruchs.

Vorteilhafte Ausgestaltungen der Erfindung sind Gegenstand der Unteransprüche.

Die Erfindung schafft ein Wandbauteil für ein Luftfahrzeug zum Bilden einer Außenwandung mit wenigstens einem ersten Wandelement, wenigstens einem zweiten Wandelement und wenigstens einer Verbindungseinrichtung zum Verbinden des ersten Wandelements mit dem zweiten Wandelement, wobei das erste Wandelement aus Faserverbundmaterial ausgebildet ist und einen ersten Außenwandbereich und einen ersten Verbindungsbereich hat, wobei der erste Außenwandbereich mit einer ersten Außenoberfläche versehen ist, um einen Oberflächenbereich der Außenwandung zu bilden, wobei der erste Verbindungsbereich an einem Randbereich des ersten Wandelements angeordnet und gegenüber der ersten Außenoberfläche zurückversetzt ausgebildet ist, wobei das zweite Wandelement einen zweiten Außenwandbereich und einen zweiten Verbindungsbereich hat, wobei der zweite Außenwandbereich mit einer zweiten Außenoberfläche versehen ist, um einen Oberflächenbereich der Außenwandung zu bilden, wobei der zweite Verbindungsbereich an einem Randbereich des zweiten Wandelements angeordnet und gegenüber der zweiten Außenoberfläche zurückversetzt ausgebildet ist, wobei die Verbindungsbereiche an zueinander zu richtenden Randbereichen zur Verbindung der Wandelemente miteinander ausgebildet und derart gegenüber den zur Außenwandbildung dienenden Außenoberflächen zurückversetzt sind, dass bei Nebeneinanderanordnung des ersten und des zweiten Wandelements mit zueinander gerichteten Verbindungsbereichen eine Vertiefung entsteht,wobei die Verbindungseinrichtung ein einstückiges Fügeelement mit einem Fügebereich zum Verbinden des ersten Verbindungsbereichs mit dem zweiten Verbindungsbereich aufweist, wobei der Fügebereich zur passenden Aufnahme in die Vertiefung ausgebildet ist, so dass eine zum Bilden des an der Fügestelle zwischen dem ersten und dem zweiten Wandelement ausgebildete Außenwandung des Luftfahrzeugs ausgebildete äußere Fügebereichs-Oberfläche des Fügebereichs bei Einfügung des Fügebereichs in die Vertiefung sowohl mit der ersten Außenoberfläche als auch der zweiten Außenoberfläche bündig ist.

Wenn das Wandbauteil mehrere Wandelemente aufweist, anstatt in einem Stück gefertigt zu sein, kann das Wandbauteil wesentlich einfacher aus Faserverbundmaterial hergestellt werden, da eine maßhaltige Außengeometrie der Wandelemente bereits bei der Fertigung erreicht werden kann, ohne zusätzliche aufwändige Verfahren zu benötigen, die die Maßhaltigkeit der Außenwandung herstellen.

Vorzugsweise sind das erste und das zweite Wandelement symmetrisch zueinander ausgebildet.

Vorteilhaft ist weiter vorgesehen, dass bei der Verbindung der beiden Wandelemente miteinander ein Fügeelement verwendet wird, das einen Fügebereich aufweist, der zur passenden Aufnahme in die Vertiefung ausgebildet ist. So werden einerseits die Verbindungsbereiche der Verbindungseinrichtung miteinander verbunden und andererseits die gebildete Vertiefung ausgefüllt. Somit wird verhindert, dass Verwirbelungen an dem Bereich der Verbindungseinrichtung entstehen. Vorteilhaft ist an dem Fügebereich eine äußere Fügebereichs-Oberfläche ausgebildet, die, wenn das Fügeelement bzw. der Fügebereich in die Vertiefung, die durch die beiden Verbindungsbereiche gebildet ist, eingefügt ist, bündig ist sowohl mit der ersten Außenoberfläche des ersten Wandelements als auch mit der zweiten Außenoberfläche des zweiten Wandelements. Vorteilhaft entsteht eine glatte Fläche an der Außenhaut des Luftfahrzeuges und negative Einflüsse auf die Aerodynamik des Luftfahrzeuges können verringert werden. Von Vorteil ist es, wenn zwischen der ersten Außenoberfläche und dem ersten Verbindungsbereich eine schräge erste Rampe vorgesehen ist, die die erste Außenoberfläche mit dem ersten Verbindungsbereich verbindet. Analog ist es vorteilhaft, wenn auch an dem zweiten Wandelement zwischen der zweiten Außenoberfläche und dem zweiten Verbindungsbereich eine schräge zweite Rampe vorgesehen ist. Dadurch, dass die beiden Rampen schräg ausgebildet sind, ist es möglich, das Fügeelement in die durch den ersten und zweiten Verbindungsbereich gebildete Vertiefung einzubringen, und dabei entstehende Schlitze möglichst schmal zu halten. Das Fügeelement kann ohne größere Probleme in die Vertiefung eingebracht werden und richtet sich in der Vertiefung selbst aus.

Vorteilhaft sind das erste Wandelement und das zweite Wandelement symmetrisch zueinander ausgebildet. Dies vereinfacht die Berechnung der Verbindungsbereichparameter.

Vorzugsweise ist das Fügeelement an einem ersten Randbereich komplementär zu der ersten Rampe und zu dem ersten Verbindungsbereich und an einem zweiten Randbereich komplementär zu der zweiten Rampe und zu dem zweiten Verbindungsbereich ausgebildet. Durch eine solche Ausbildung kann das Fügeelement exakt mit der durch die beiden Verbindungsbereiche und die beiden Rampen gebildete Vertiefung abschließen und so vorzugsweise eine besonders enge Verbindung zwischen den beiden Wandelementen ermöglichen. Die Außenhaut des Luftfahrzeuges ist praktisch störungsfrei und die Aerodynamik wird durch die Verbindung der Wandelemente fast nicht gestört.

In besonders bevorzugter Ausgestaltung sind die beiden Wandelemente doppelschalig ausgebildet und weisen einen ersten bzw. einen zweiten Innenwandbereich auf, wobei zwischen den Außenwandbereichen und den Innenwandbereichen eine stützende Kernstruktur angeordnet ist. Doppelschalige Wandelemente vereinfachen die Fertigung und Montage erheblich, da die Schalen nur auf einer Seite maßhaltig sein müssen. Die doppelschalige Bauweise ersetzt Springer und Spante vorzugsweise vollständig und ermöglicht einen geringeren Arbeitsaufwand.

Um eine besonders einfache und feste Herstellung der Wandelemente zu ermöglichen, sind die Außenwandbereiche und die Innenwandbereiche an den Verbindungsbereichen zusammengebacken und/oder kraftflussgerecht verwoben, um so einen einstückigen Verbindungsbereich zu bilden. Ein derart gebildeter Verbindungsbereich weist eine besondere Festigkeit auf, und ist daher vorteilhaft besonders zur Verbindung der beiden Wandelemente geeignet.

Vorteilhaft ist auch an jedem Wandelement jeweils eine schräge Innenrampe zur Verbindung der Verbindungsbereiche mit den Innenwandbereichen vorgesehen. Durch Vorsehen der Innenrampen werden die Verbindungsbereiche weiter zur Außenoberfläche der Wandelemente hin versetzt und der Fügebereich des Fügeelementes kann unter Material- und somit Kosteneinsparung schmaler ausgeführt werden. Das Vorsehen einer Doppelrampe mit innerer und äußerer Rampe führt zu einem besonders steifen und festen Profil und zu einer festen Verbindung des Verbindungsbereiches mit dem restlichen doppelschaligen Bereich des Wandelements. Der doppelschalige Bereich, der vorzugsweise in Sandwichbauweise aufgebaut ist, läuft somit in einen monolithischen Bereich aus.

Besonders bevorzugt ist das Fügeelement einstückig in Pultrusionstechnik gebildet. Mit dieser Technik lassen sich Bauteile einfach und kostengünstig herstellen. Weiter ist es damit möglich, auch das Fügeelement aus faserverstärkten Kunststoffmaterialien zu bilden und so ein geringes Gewicht bei gleichzeitig hoher Festigkeit zu erreichen.

In besonders bevorzugter Ausgestaltung weist das Fügeelement neben dem Fügebereich einen Flansch auf, der sich auf der gegenüberliegenden Seite der äußeren Fügebereichs-Oberfläche von dem Fügebereich weg vorspringend erstreckt. Das Fügeelement kann auch mehrere Flansche aufweisen, die sich von dem Fügebereich weg vorspringend auf der gegenüberliegenden Seite der äußeren Fügebereichs-Oberfläche erstrecken. Der oder die Flansche können zur Befestigung von Innenstrukturen verwendet werden. Somit sind Innenstrukturen in einfacher Weise z.B. mit der äußeren Rumpfstruktur fest verbindbar, z.B. kann vorteilhaft an einem Flansch ein Fußbodenträger im Inneren des Luftfahrzeugrumpfes befestigt werden. Weitere Befestigungsvorrichtungen an den Wandelementen sind somit entbehrlich, und die Struktur der Faserverbundmaterialien wird nicht durch beispielsweise Bohrungen für Nieten oder Aussparungen für zusätzliche Befestigungselemente geschwächt. Weist das Fügeelement mehrere Flansche auf, bilden diese vorteilhaft einen Aufnahmeraum zwischen sich, in dem beispielsweise Antennensysteme einfach eingebracht werden können. Es ist auch möglich, Kabelstränge an oder zwischen den Flanschen zu befestigen. Um die Montage besonders einfach zu gestalten, können solche beispielsweise Antennensysteme oder Kabelstränge bereits vor der Verbindung der beiden Wandelemente an dem Fügeelement befestigt werden. Dadurch können die späteren Arbeiten reduziert werden.

Vorzugsweise weist ein Luftfahrzeug das beschriebene Wandbauteil auf, wobei dessen Wandelemente mit den Fügeelementen entlang von Längsnähten verbunden sind, die sich in Längsrichtung des Luftfahrzeugrumpfes erstrecken. Dieses Luftfahrzeug weist somit eine Oberfläche auf, bei der durch die Verbindung der Wandelemente die Aerodynamik nicht oder nur sehr wenig beeinflusst wird.

Wird vorzugsweise ein Fußbodenträger bzw. eine Bodenstruktur an den sich nach innen erstreckenden Flanschen von zwei sich gegenüberliegenden Fügeelementen befestigt, müssen keine zusätzlichen Befestigungsvorrichtungen an dem Flugzeugrumpf vorgesehen werden, und die Struktur der Wandelemente bzw. des Rumpfes wird nicht geschwächt.

Ein Verfahren zum Verbinden von Wandelementen, die aus Faserverbundmaterial gebildet sind, und durch die Verbindung einer Außenwandung eines Luftfahrzeugs bilden, weist die folgenden Schritte auf:
- Ausbilden von Randbereichen an einem ersten und einem zweiten Wandelement als erstem bzw. zweitem Verbindungsbereich, so dass die Verbindungsbereiche gegenüber den die Außenwandung bildenden Außenoberflächen der beiden Wandelemente zurückversetzt sind;
- Ausrichten der beiden Verbindungsbereiche zueinander, so dass eine Vertiefung an der Fügestelle zwischen den zu verbindenden Wandelementen entsteht, die zu den beiden Außenoberflächen der Wandelemente zurückversetzt ausgebildet ist;
- Vorsehen eines einstückigen Fügeelementes mit einem Fügebereich, der derart in die Vertiefung passt, dass eine an der Fügestelle ausgebildete äußere Fügebereichs-Oberfläche mit den Außenoberflächen der Wandelemente bündig ist, wenn der Fügebereich in die Vertiefung eingesetzt wird; und
- Befestigen der beiden Verbindungsbereiche an den Fügebereich.

Mit einem solchen Verfahren kann vorteilhaft eine Außenoberfläche eines Luftfahrzeuges gebildet werden, die keine Erhebungen oder Vertiefungen aufweist, die die Aerodynamik des Luftfahrzeuges stören könnten. Weiter wird durch die Verbindung von lediglich dem Fügebereich des Fügeelementes mit den Verbindungsbereichen der Wandelemente die Struktur der Faserverbundmaterialien, aus denen die Wandelemente gebildet sind, nicht geschwächt.

Vorzugsweise wird bei der Bildung der Randbereiche der Wandelemente ein weiterer Schritt vorgesehen, bei dem der Verbindungsbereich derart gebildet wird, dass er auch gegenüber einer die Innenwandung bildenden Innenoberfläche der Wandelemente zurückversetzt ist.

Dadurch werden die Verbindungsbereiche weiter zu der Außenoberfläche des Luftfahrzeuges versetzt und der Fügebereich des Fügeelementes kann, um Material einzusparen, schmal ausgebildet werden.

Umfasst die Ausbildung der Randbereiche der Wandelemente vorzugsweise weiter den Schritt Zusammenbacken oder Verweben der Außenwandungen mit den Innenwandungen, entsteht so an jedem Wandelement ein Verbindungsbereich mit besonders hoher Festigkeit und Stabilität.

In einem Montageverfahren zur Montage eines Inneneinrichtungselementes an einen Bereich des Rumpfes des Luftfahrzeuges wird vorteilhaft zunächst der Rumpf des Luftfahrzeuges nach dem oben beschriebenen Verfahren gebildet. Weiter vorteilhaft wird entweder ein Flansch an einer gegenüberliegenden Seite der äußeren Fügebereichs-Oberfläche vorgesehen, der sich von dem Fügebereich weg erstreckt, woran dann eine Bodenstruktur als Inneneinrichtungselement befestigt wird, oder es werden wenigstens zwei Flansche vorgesehen, die einen Zwischenraum zwischen sich ausbilden, in dem dann Systeme wie beispielsweise Antennensysteme befestigt werden. Weiter vorzugsweise werden Kabelstränge an den Flanschen befestigt.

Durch das Vorsehen der Flansche ist es nicht mehr nötig, dass zusätzliche Halteeinrichtungen sowohl für die Bodenstruktur als auch für die Antennensysteme und Kabelstränge an den Wandelementen vorgesehen werden müssen. Solche zusätzliche Einrichtungen schwächen die Faserverbundstruktur, was durch das Vorsehen der Flansche an dem Fügeelement vermieden wird.

Ausführungsbeispiele der Erfindung werden nachfolgend anhand der beigefügten Zeichnungen näher erläutert. Darin zeigt:
- Fig. 1: eine erste Ausführungsform eines Wandbauteils mit zwei Wandelementen und einer Verbindungseinrichtung;
- Fig. 2: eine zweite Ausführungsform eines Wandbauteils mit zwei Wandelementen und einer Verbindungseinrichtung;
- Fig. 3: rein zu Erläuterungszwecken ein erstes Wandbauteil nach einer nicht von der Erfindung umfassten anderen Verbindungstechnik;
- Fig. 4: rein zu Erläuterungszwecken ein erstes Wandelement in U-Form nach einer nicht von der Erfindung umfassten anderen Verbindungstechnik;
- Fig. 5: rein zu Erläuterungszwecken ein zweites Wandelement in U-Form nach einer nicht von der Erfindung umfassten anderen Verbindungstechnik;
- Fig. 6: rein zu Erläuterungszwecken ein zweites Wandbauteil nach einer nicht von der Erfindung umfassten anderen Verbindungstechnik;
- Fig. 7: rein zu Erläuterungszwecken ein drittes Wandbauteil nach einer nicht von der Erfindung umfassten anderen Verbindungstechnik; und
- Fig. 8: rein zu Erläuterungszwecken ein viertes Wandbauteil nach einer nicht von der Erfindung umfassten anderen Verbindungstechnik.

Eine erhebliche Vereinfachung bei Fertigung und Montage eines Luftfahrzeugs bietet das Konzept eines Doppelschalers. Hier wird eine äußere Haut flächig mit einer leichten und hohen Kernstruktur unterstützt und rückseitige wird eine zweite Haut aufgebracht. In den Fig. 1 und Fig. 2 ist dargestellt, wie solche doppelschaligen Wandelemente miteinander verbunden werden können.

Fig. 1 zeigt ein Wandbauteil 40 eines nicht dargestellten Luftfahrzeuges mit einem ersten Wandelement 42 aus Faserverbundmaterial, einem zweiten Wandelement 44 aus Faserverbundmaterial und mit einer Verbindungseinrichtung 46.

Das erste Wandelement 42 weist einen ersten Außenwandbereich 48 mit einer ersten Außenoberfläche 50 auf. Die erste Außenoberfläche 50 bildet einen Oberflächenbereich 52 einer Außenwandung 54 des Luftfahrzeuges. Weiter weist das erste Wandelement 42 an einem Randbereich 56 einen ersten Verbindungsbereich 58 auf.

Das zweite Wandelement 44 ist symmetrisch zu dem ersten Wandelement 42 gebildet und weist entsprechend einen zweiten Außenwandbereich 60 mit einer zweiten Außenoberfläche 62 sowie an einem Randbereich 56 einen zweiten Verbindungsbereich 64 auf. Die Verbindungseinrichtung 46 wird durch die Verbindungsbereiche 58, 64 und ein Fügeelement 68 gebildet. Der erste Verbindungsbereich 58 ist gegenüber der ersten Außenoberfläche 50 zurückversetzt angeordnet, und der zweite Verbindungsbereich 64 ist gegenüber der zweiten Außenoberfläche 62 ebenfalls zurückversetzt angeordnet. Die beiden Wandelemente 44, 46 sind mit ihren Verbindungsbereichen 58, 64 an zueinander gerichteten Randbereichen 56 nebeneinander angeordnet und bilden somit eine Vertiefung 66.

Die Wandbauteile weisen jeweils schräge Rampen 76, 78 auf, die die Außenoberflächen 50, 62 mit den Verbindungsbereichen 58, 64 verbinden.

Da die beiden Wandelemente 42, 44 symmetrisch zueinander gebildet sind, weisen die schrägen Rampen 76, 78 den gleichen Winkel zu den Außenoberflächen 50, 62 auf.

Die Verbindungseinrichtung 46 weist in der Vertiefung 66 das Fügeelement 68 mit einem Fügebereich 70 auf. Der Fügebereich 70 ist derart ausgebildet, dass er passend in der Vertiefung 66 aufgenommen werden kann. Er schließt bündig mit der ersten Außenoberfläche 50 und der zweiten Außenoberfläche 62 ab, so dass an einer Fügestelle 72 die Außenwandung 54 des Luftfahrzeuges glatt und ohne Vorsprünge verläuft. Eine äußere Fügebereichs-Oberfläche 74 des Fügebereichs 70 schließt daher exakt mit der ersten Außenoberfläche 50 und der zweiten Außenoberfläche 62 ab.

Die beiden Wandelemente 42, 44 sind doppelschalig ausgebildet, und weisen jeweils einen Innenwandbereich 80, 82 auf. Zwischen den Innenwandbereichen 80, 82 und den Außenwandbereichen 48, 60 ist in den beiden Wandelementen 42, 44 eine stützende Kernstruktur 84 angeordnet.

Die Verbindungsbereiche 58, 64 sind über schräge Innenrampen 86, 88 mit den Innenwandbereichen 80, 82, die jeweils eine eine Innenwandung 81 bildende Innenoberfläche 83, 85 aufweisen, verbunden. An den Verbindungsbereichen 58, 64 sind die Außenwandbereiche 48, 60 mit den Innenwandbereich 80, 82 entweder zusammengebacken und/oder kraftflussgerecht verwoben, um so einstückige Verbindungsbereiche 58, 64 zu bilden.

Das Fügeelement 68 ist an Randbereichen 90 komplementär zu den schrägen Rampen 76, 78 und zu den Verbindungsbereichen 58, 64 ausgebildet. Es weist gegenüberliegend der Fügebereichs-Oberfläche 74 einen sich von dem Fügebereich 70 weg vorspringend erstreckenden Flansch 92 auf. Der Flansch 92 und der Fügebereich 70 des Fügeelementes 68 sind einstückig in Pultrusionstechnik gebildet.

An dem Flansch 92 ist über Befestigungsmittel 94 eine Bodenstruktur 96 befestigt.

Das Fügeelement 68 verbindet über Befestigungsmittel 98 das erste Wandelement 42 mit dem zweiten Wandelement 44. Als Befestigungsmittel 94, 98 können Nieten, Bolzen oder Schrauben oder dergleichen eingesetzt sein.

In Fig. 2 ist eine zweite Ausführungsform der Verbindungseinrichtung 46 aus Fig. 1 gezeigt. Die Wandelemente 42, 44 sind hier über ein Fügeelement 68 verbunden, das zwei Flansche 92 aufweist. Zwischen den beiden Flanschen 92 ist ein Aufnahmeraum 100 gebildet, in dem Systeme, hier Antennensysteme 102, untergebracht sind. Seitlich der Flansche 92 verlaufen Kabelstränge 104. Die Bodenstruktur 96, das Antennensystem 102 und die Kabelstränge 104 stellen Inneneinrichtungselemente 106 des Luftfahrzeuges dar.

Die Verbindungseinrichtung 46 gemäß den Ausführungsbeispielen von Fig. 1 und 2 weist somit ein multifunktionales Fügeelement 68 auf, das einfach eine perfekte aerodynamische Außenhaut des Luftfahrzeuges ermöglicht, bei dem die Wandelemente 42, 44 symmetrisch sind, um die Berechnung zu vereinfachen, und gleichzeitig eine Halterungsform in Form der Flansche 92 für den Rumpfinnenbereich gegeben ist. Die beiden doppelschaligen Wandelemente 44, 46 gehen über schräge Rampen 76, 78 und schräge Innenrampen 86, 88, d. h. über eine Doppelrampe, in einen einstückigen Verbindungsbereich 58, 60 über. Wird als Fügeelement 68 ein T-Profil in der Verbindungseinrichtung 46 eingesetzt, zeigt der Flansch 92 zur Innenseite des Rumpfes. Solche T-Profile sind als gerade Pultrusionsprofile kostengünstig herzustellen. Wenn sie mechanisch ausgelegt sind, kann der Flansch im Rumpfinneren für die Montage von Bodenstrukturen 96 verwendet werden.

Alternativ kann das Fügeelement 68 zwei Flansche 92 aufweisen. Dann können beispielsweise im Scheitelbereich an der Rumpfoberseite Kabelstränge 104 und Antennensysteme 102 bereits vor der Rumpfmontage extern eingebracht und vorbereitet werden, so dass die späteren Arbeiten reduziert werden.

Durch eine derartige Ausführung der Fügestellen 72 reduzieren sich Kosten durch gesparte zusätzliche Halterungen und der Fertigungsaufwand erheblich.

### Bezugszeichenliste:

- 10: erstes Segment
- 12: zweites Segment
- 14: erste Aussparung
- 16: zweite Aussparung
- 18: Vollprofil
- 20: Außenhaut
- 24: Verbindungselement
- 26: Nieten
- 28: Nietbohrung
- 30: Fußbodengestell
- 32: Inneres
- 34: Halterung
- 36: Innenhaut
- 38: Verbindungsstelle
- 39: Aussparungen
- 40: Wandbauteil
- 42: erstes Wandelement
- 44: zweites Wandelement
- 46: Verbindungseinrichtung
- 48: erster Außenwandbereich
- 50: erste Außenoberfläche
- 52: Oberflächenbereich
- 54: Außenwandung
- 56: Randbereich (Wandelemente)
- 58: erster Verbindungsbereich
- 60: zweiter Außenwandbereich
- 62: zweite Außenoberfläche
- 64: zweiter Verbindungsbereich
- 66: Vertiefung
- 68: Fügeelement
- 70: Fügebereich
- 72: Fügestelle
- 74: Fügebereichs-Oberfläche
- 76: erste schräge Rampe
- 78: zweite schräge Rampe
- 80: erster Innenwandbereich
- 81: Innenwandung
- 82: zweiter Innenwandbereich
- 83: erste Innenoberfläche
- 84: Kernstruktur
- 85: zweite Innenoberfläche
- 86: erste schräge Innenrampe
- 88: zweite schräge Innenrampe
- 90: Randbereich (Fügeelement)
- 92: Flansch
- 94: Befestigungsmittel
- 96: Bodenstruktur
- 98: Befestigungsmittel
- 100: Aufnahmeraum
- 102: Antennensysteme
- 104: Kabelstränge
- 106: Inneneinrichtungselement

## Patentansprüche

1. Wandbauteil (40) für ein Luftfahrzeug zum Bilden einer Außenwandung (54) mit wenigstens einem ersten Wandelement (42), wenigstens einem zweiten Wandelement (44) und wenigstens einer Verbindungseinrichtung (46) zum Verbinden des ersten Wandelements (42) mit dem zweiten Wandelement (44), wobei das erste Wandelement (42) aus Faserverbundmaterial ausgebildet ist und einen ersten Außenwandbereich (48) und einen ersten Verbindungsbereich (58) hat, wobei der erste Außenwandbereich (48) mit einer ersten Außenoberfläche (50) versehen ist, um einen Oberflächenbereich (52) der Außenwandung (54) zu bilden, wobei der erste Verbindungsbereich (58) an einem Randbereich (56) des ersten Wandelements (42) angeordnet und gegenüber der ersten Außenoberfläche (50) zurückversetzt ausgebildet ist,
wobei das zweite Wandelement (44) einen zweiten Außenwandbereich (60) und einen zweiten Verbindungsbereich (64) hat, wobei der zweite Außenwandbereich (60) mit einer zweiten Außenoberfläche (62) versehen ist, um einen Oberflächenbereich (52) der Außenwandung (54) zu bilden, wobei der zweite Verbindungsbereich (64) an einem Randbereich (56) des zweiten Wandelements (44) angeordnet und gegenüber der zweiten Außenoberfläche (62) zurückversetzt ausgebildet ist,
wobei die Verbindungsbereiche (58, 64) an zueinander zu richtenden Randbereichen (56) zur Verbindung der Wandelemente (42, 44) miteinander ausgebildet und derart gegenüber den zur Außenwandbildung dienenden Außenoberflächen (50, 62) zurückversetzt sind, dass bei Nebeneinanderanordnung des ersten und des zweiten Wandelements (42, 44) mit zueinander gerichteten Verbindungsbereichen (58, 64) eine Vertiefung (66) entsteht,
wobei die Verbindungseinrichtung (46) ein einstückiges Fügeelement (68) mit einem Fügebereich (70) zum Verbinden des ersten Verbindungsbereichs (58) mit dem zweiten Verbindungsbereich (64) aufweist, **dadurch gekennzeichnet, dass** der Fügebereich (70) zur passenden Aufnahme in die Vertiefung (66) ausgebildet ist, so dass eine zum Bilden des an der Fügestelle (72) zwischen dem ersten und dem zweiten Wandelement (42, 44) ausgebildete Außenwandung (54) des Luftfahrzeugs ausgebildete äußere Fügebereichs-Oberfläche (74) des Fügebereichs (70) bei Einfügung des Fügebereichs (70) in die Vertiefung (66) sowohl mit der ersten Außenoberfläche (50) als auch der zweiten Außenoberfläche (62) bündig ist.

2. Wandbauteil (40) nach Anspruch 1,
**dadurch gekennzeichnet, dass** zwischen der ersten Außenoberfläche (50) und dem ersten Verbindungsbereich (58) eine schräge erste Rampe (76) zum Verbinden der ersten Außenoberfläche (50) mit dem ersten Verbindungsbereich (58) vorgesehen ist und dass zwischen der zweiten Außenoberfläche (62) und dem zweiten Verbindungsbereich (64) eine schräge zweite Rampe (78) zum Verbinden der zweiten Außenoberfläche (62) mit dem zweiten Verbindungsbereich (64) vorgesehen ist.

3. Wandbauteil (40) nach einem der voranstehenden Ansprüche,
**dadurch gekennzeichnet, dass** das erste Wandelement (42) und das zweite Wandelement (44) symmetrisch zueinander ausgebildet sind.

4. Wandbauteil (40) nach Anspruch 2 oder 3,
**dadurch gekennzeichnet, dass** das Fügeelement (68) an einem ersten Randbereich (90) komplementär zu der ersten Rampe (76) und zu dem ersten Verbindungsbereich (58) und an einem zweiten Randbereich (90) komplementär zu der zweiten Rampe (78) und zu dem zweiten Verbindungsbereich (64) ausgebildet ist.

5. Wandbauteil (40) nach einem der voranstehenden Ansprüche,
**dadurch gekennzeichnet, dass** das erste Wandelement (42) doppelschalig ausgebildet ist und wenigstens einen ersten Innenwandbereich (80) aufweist und dass das zweite Wandelement (44) doppelschalig ausgebildet ist und einen zweiten Innenwandbereich (82) aufweist, wobei zwischen dem ersten Außenwandbereich (48) und dem ersten Innenwandbereich (80) und zwischen dem zweiten Außenwandbereich (60) und dem zweiten Innenwandbereich (82) jeweils eine stützende Kernstruktur (84) angeordnet ist.

6. Wandbauteil (40) nach Anspruch 5,
**dadurch gekennzeichnet, dass** der erste Außenwandbereich (48) und der erste Innenwandbereich (80) an dem ersten Verbindungsbereich (58) zum einstückigen Bilden des ersten Verbindungsbereiches (58) zusammengebacken und/oder verwoben sind und dass der zweite Außenwandbereich (60) und der zweite Innenwandbereich (82) an dem zweiten Verbindungsbereich (64) zum einstückigen Bilden des zweiten Verbindungsbereiches (64) zusammengebacken und/oder verwoben sind

7. Wandbauteil (40) nach Anspruch 5 oder 6,
**dadurch gekennzeichnet, dass** eine schräge erste Innenrampe (86) zur Verbindung des ersten Verbindungsbereichs (58) mit dem ersten Innenwandbereich (80) vorgesehen ist und dass eine schräge zweite Innenrampe (88) zur Verbindung des zweiten Verbindungsbereichs (64) mit dem zweiten Innenwandbereich (82) vorgesehen ist.

8. Wandbauteil (40) nach einem der voranstehenden Ansprüche,
**dadurch gekennzeichnet, dass** das Fügeelement (68) einstückig in Pultrusionstechnik gebildet ist.

9. Wandbauteil (40) nach einem der voranstehenden Ansprüche,
**dadurch gekennzeichnet, dass** das Fügeelement (68) den Fügebereich (70) und einen sich auf der gegenüberliegenden Seite der äußeren Fügebereichs-Oberfläche (74) in von dem Fügebereich (70) weg vorspringend erstreckenden Flansch (92) aufweist oder dass das Fügeelement (68) mehrere sich auf der gegenüberliegenden Seite der äußeren Fügebereichs-Oberfläche (74) von dem Fügebereich (70) weg vorspringend erstreckenden Flansche (92) zur Bildung eines Aufnahmeraumes (100) dazwischen aufweist.

10. Luftfahrzeugrumpf, umfassend wenigstens ein Wandbauteil (40) nach einem der voranstehenden Ansprüche, dadurch gekkenzeichnet, dass dessen Wandelemente (42, 44) entlang von in Längsrichtung des Luftfahrzeugrumpfes verlaufenden Längsnahten mit den Fügeelementen (68) verbunden sind.

11. Luftfahrzeugrumpf (22) nach Anspruch 10 mit einem Wandbauteil (40) nach Anspruch 9,
**dadurch gekennzeichnet, dass** eine Bodenstruktur (96) an den sich nach innen erstreckenden Flanschen (92) wenigstens zweier Fügeelemente (68) befestigt ist.

12. Verfahren zum Verbinden von Wandelementen (42, 44) aus Faserverbundwerkstoff zum Bilden eines Bereichs einer Außenwandung (54) eines Luftfahrzeuges mit den Schritten:
a) Ausbilden eines Randbereichs (56) eines ersten Wandelements (42) als erster Verbindungsbereich (58), so dass der erste Verbindungsbereich (58) gegenüber einer die Außenwandung (54) bildenden ersten Außenoberfläche (50) zurückversetzt ist,
b) Ausbilden eines Randbereichs (56) eines zweiten Wandelements (44) als zweiter Verbindungsbereich(64), so dass der zweite Verbindungsbereich (64) gegenüber einer die Außenwandung (54) bildenden zweiten Außenoberfläche (62) zurückversetzt ist,
c) Ausrichten des ersten und des zweiten Verbindungsbereichs (58, 64) zueinander, so dass eine gegenüber der ersten Außenoberfläche (50) und der zweiten Außenoberfläche (62) zurückversetzte Vertiefung (66) an der Fügestelle (72) zwischen den zu verbindenden Wandelementen (42, 44) entsteht,
d) Vorsehen eines einstückigen Fügeelements (68) mit einem in die Vertiefung (66) derart passenden Fügebereich (70), dass eine zur Bildung des Außenwandbereichs (48, 60) des Luftfahrzeugs an der Fügestelle (72) ausgebildete äußere Fügebereichs-Oberfläche (74) bei Einsetzen des Fügebereichs (70) in die Vertiefung (66) mit der ersten Außenoberfläche (50) und der zweiten Außenoberfläche (62) bündig ist, und
e) Befestigen des ersten Verbindungsbereichs (58) und des zweiten Verbindungsbereichs (64) an den Fügebereich (70).

13. Verfahren nach Anspruch 12,
wobei Schritt a) den Schritt
a1) Ausbilden eines Randbereichs (56) eines ersten Wandelements (42) als erster Verbindungsbereich (58), so dass der erste Verbindungsbereich (58) gegenüber einer die Innenwandung (81) bildenden ersten Innenoberfläche (83) zurückversetzt ist
und wobei Schritt b) den Schritt
b1) Ausbilden eines Randbereichs (56) eines zweiten Wandelements (44) als zweiter Verbindungsbereich (64), so dass der zweite Verbindungsbereich (64) gegenüber einer die Innenwandung (81) bildenden zweiten Innenoberfläche (85) zurückversetzt ist
aufweist.

14. Verfahren nach Anspruch 13, wobei die Schritte a1) und b1) den Schritt Zusammenbacken oder Verweben des ersten Außenwandbereichs (48) mit der ersten Innenoberfläche (83) und des zweiten Außenwandbereichs (60) mit der zweiten Innenoberfläche (85) umfasst.

15. Montageverfahren zur Montage eines Inneneinrichtungselements (106) an einem Bereich eines Rumpfes (22) eines Luftfahrzeuges, der durch Verbinden von Wandelementen (42, 44) mit einem Verfahren nach einem der Ansprüche 12 bis 14 gebildet wird, wobei Schritt d) den Schritt d1a) Vorsehen eines sich auf der gegenüberliegenden Seite der äußeren Fügebereichs-Oberfläche (74) in orthogonaler Richtung zu dem Fügebereich (70) erstreckenden Flansches (92) enthält
und ein Schritt fa) Befestigen einer Bodenstruktur (96) an dem Flansch (92) vorgesehen ist
oder
dass Schritt d) den Schritt
d1b) Vorsehen wenigstens zweier sich auf der gegenüberliegenden Seite der äußeren Fügebereichs-Oberfläche (74) in orthogonaler Richtung zu dem Fügebereich (70) erstreckenden Flansche (92) enthält
und der Schritt
fb1) Befestigen von Systemen (102) in einem zwischen den beiden Flanschen (92) gebildeten Aufnahmeraum (100)
und/oder der Schritt
fb2) Befestigen von Kabelsträngen (104) an den beiden Flanschen (92) vorgesehen ist.

## Claims

1. A wall component (40) for an aircraft for forming an outer wall (54), comprising at least one first wall element (42), at least one second wall element (44) and at least one connecting device (46) for connecting the first wall element (42) to the second wall element (44),
wherein the first wall element (42) is formed of composite fiber material and has a first outer wall region (48) and a first connecting region (58), wherein the first outer wall region (48) is provided with a first outer surface (50) in order to form a surface area (52) of the outer wall (54), wherein the first connecting region (58) is arranged on an edge region (56) of the first wall element (42) and configured such that it is set back relative to the first outer surface (50),
wherein the second wall element (44) has a second outer wall region (60) and a second connecting region (64), wherein the second outer wall region (60) is provided with a second outer surface (62) in order to form a surface area (52) of the outer wall (54), wherein the second connecting region (64) is arranged on an edge region (56) of the second wall element (44) and configured such that it is set back relative to the second outer surface (62),
wherein the connecting regions (58, 64) are designed for connecting the wall elements (42, 44) to one another on the edge regions (56) to be directed toward one another and set back relative to the outer surfaces (50, 56) that serve for forming the outer wall in such a way that a depression (66) is created when the first and the second wall element (42, 44) are arranged adjacent to one another such that their connecting regions (58, 64) are directed toward one another,
wherein the connecting device (46) comprises a one-piece joint element (68) with a joint region (70) for connecting the first connecting region (58) to the second connecting region (64), and
**characterized in that** the joint region (70) is configured for being accommodated in the depression (66) in a fitted fashion such that an outer joint region surface (74) of the joint region (70) is configured for forming the outer wall (54) of the aircraft at the joint (72) between the first and the second wall element (42, 44) is arranged flush with the first outer surface (50), as well as the second outer surface (62), when the joint region (70) is inserted into the depression (66).

2. The wall component (40) of claim 1, wherein an oblique first ramp (76) for connecting the first outer surface (50) to the first connecting region (58) is provided between the first outer surface (50) and the first connecting region (58), and wherein an oblique second ramp (78) for connecting the second outer surface (62) to the second connecting region (64) is provided between the second outer surface (62) and the second connecting region (84).

3. The wall component (40) of one of the preceding claims, wherein the first wall element (42) and the second wall element (44) are configured symmetrical to one another.

4. The wall component (40) of one of claims 2 or 3, wherein the joint element (68) is configured complementary to the first ramp (76) and to the first connecting region (58) on a first edge region (90) and configured complementary to the second ramp (78) and to the second connecting region (64) on a second edge region (90).

5. The wall component (40) of one of the preceding claims, wherein the first wall element (42) has a double-shell design and comprises at least one first inner wall region (80) and the second wall element (44) has a double-shell design and comprises a second inner wall region (82), and wherein a supporting core structure (84) is respectively arranged between the first outer wall region (48) and the first inner wall region (80) and between the second outer wall region (60) and the second inner wall region (82).

6. The wall component (40) of claim 5, wherein the first outer wall region (48) and the first inner wall region (80) are baked together and/or interwoven on the first connecting region (58) in order to realize the first connecting region (58) in one piece, and wherein the second outer wall region (60) and the second inner wall region (82) are baked together and/or interwoven on the second connecting region (64) in order to realize the second connecting region (64) in one piece.

7. The wall component (40) of one of claims 5 or 6, wherein an oblique first inner ramp (86) is provided for connecting the first connecting region (58) to the first inner wall region (80), and wherein an oblique second inner ramp (88) is provided for connecting the second connecting region (64) to the second inner wall region (82).

8. The wall component (40) of one of the preceding claims, wherein the joint element (68) is configured in one piece in accordance with pultrusion technique.

9. The wall component (40) of one of the preceding claims, wherein the joint element (68) comprises the joint region (70) and a flange (92) that extends away from the joint region (70) in a projecting fashion on the opposite side of the outer joint region surface (74), or wherein the joint element (68) comprises several flanges (92) that extend away from the joint region (70) in a projecting fashion on the opposite side of the outer joint region surface (74) in order to form a receptacle space (100) between one another.

10. An aircraft fuselage, comprising at least one wall component (40) of one of the preceding claims, **characterized in that** the wall elements (42, 44) are connected to the joint elements (68) along longitudinal seams that extend in the longitudinal direction of the aircraft fuselage.

11. The aircraft fuselage of claim 10 with a wall component (40) of claim 9, wherein a floor structure (96) is mounted on the inwardly extending flanges (92) of at least two joint elements (68).

12. A method for connecting wall elements (42, 44) of composite fiber material in order to form an area of an outer wall (54) of an aircraft, featuring the following steps:
a) forming an edge region (56) of a first wall element (42) in the form of a first connecting region (58) such that the first connecting region (58) is set back relative to a first outer surface (50) that forms the outer wall (54),
b) forming an edge region (56) of a second wall element (44) in the form of a second connecting region (64) such that the second connecting region (64) is set back relative to a second outer surface (62) that forms the outer wall (54),
c) aligning the first and the second connecting regions (58, 64) relative to one another such that a depression (66) that is set back relative to the first outer surface (50) and the second outer surface (62) is formed at the joint (72) between the wall elements (42, 44) to be connected;
d) providing a one-piece joint element (68) with a joint region (70) that fits into the depression (66) in such a way that an outer joint region surface (74) configured for forming the outer wall region (48, 60) of the aircraft at the joint (70) is arranged flush with the first outer surface (50) and the second outer surface (62) when the joint region (70) is inserted into the depression (66); and
e) mounting the first connecting region (58) and the second connecting region (64) on the joint region (70).

13. The method of claim 12,
wherein step a) features the step of
a1) forming an edge region (56) of a first wall element (42) in the form of a first connecting region (58) such that the first connecting region (58) is set back relative to a first inner surface (81) that forms the inner wall (83),
and wherein step b) features the step of
b1) forming an edge region (56) of a second wall element (44) in the form of a second connecting region (64) such that the second connecting region (64) is set back relative to a second inner surface (85) that forms the inner wall (81).

14. The method of claim 13, wherein steps a1) and b1) feature the step of baking together or interweaving the first outer wall region (48) with the first inner surface (83) and the second outer wall region (60) with the second inner surface (85).

15. A method for installing an interior furnishing element (106) on a region of the fuselage (22) of an aircraft that is formed by connecting wall elements (42, 44) by means of a method of one of claims 12 to 14,
wherein step d) features the step of
d1a) providing a flange (92) that extends orthogonally to the joint region (70) on the opposite side of the outer joint region surface (74) and a step fa) of mounting a floor structure (96) on the flange (92) is carried out or
wherein step d) features the step of
d1b) providing at least two flanges (92) that extend orthogonally to the joint region (70) on the opposite side of the outer joint region surface (74)
and the step
fb1) of mounting systems (102) in a receptacle space (100) formed between the two flanges (92)
and/or the step
fb2) of mounting cable harnesses (104) on the two flanges (92) is carried out.

## Revendications

1. Composant de paroi (40) pour un aéronef, destiné à former une paroi extérieure (54), comprenant au moins un premier élément de paroi (42), au moins un second élément de paroi (44), et au moins un dispositif d'assemblage (46) pour assembler le premier élément de paroi (42) avec le second élément de paroi (44), le premier élément de paroi (42) étant réalisé en matériau renforcé par des fibres et présentant une première zone de paroi extérieure (48) et une première zone d'assemblage (58), la première zone de paroi extérieure (48) étant munie d'une première surface extérieure (50), pour former une zone superficielle (52) de la paroi extérieure (54), la première zone d'assemblage (58) étant disposée sur une zone de bordure (56) du premier élément de paroi (42) et étant réalisée en déport par rapport à la première surface extérieure (50),
le second élément de paroi (44) présentant une seconde zone de paroi extérieure (60) et une seconde zone d'assemblage (64), la seconde zone de paroi extérieure (60) étant munie d'une seconde surface extérieure (62), pour former une zone superficielle (52) de la paroi extérieure (54), la seconde zone d'assemblage (64) étant disposée sur une zone de bordure (56) du second élément de paroi (44) et étant réalisée en déport par rapport à la seconde surface extérieure (62),
les zones d'assemblage (58, 64) étant réalisées entre elles sur des zones de bordure (56), à diriger l'une vers l'autre, pour l'assemblage des éléments de paroi (42, 44) et étant en déport par rapport aux surfaces extérieures (50, 62), qui servent à former la paroi extérieure, de telle sorte qu'il en résulte un creux (66) lors de la juxtaposition du premier et du second élément de paroi (42, 44) avec des zones d'assemblage (58, 64) dirigées l'une vers l'autre,
le dispositif d'assemblage (46) présentant un élément de jointoiement (68) monobloc avec une zone de jointoiement (70) pour assembler la première zone d'assemblage (58) avec la seconde zone d'assemblage (64),
**caractérisé en ce que**
la zone de jointoiement (70) est réalisée pour un logement ajusté dans le creux (66), de sorte qu'une surface extérieure (74) de la zone de jointoiement (70), réalisée pour former la paroi extérieure (54) de l'aéronef sur l'emplacement de jointoiement (72) entre le premier et le second élément de paroi (42, 44), affleure lors de l'insertion de la zone de jointoiement (70) dans le creux (66) aussi bien avec la première surface extérieure (50) qu'avec la seconde surface extérieure (62).

2. Composant de paroi (40) selon la revendication 1,
**caractérisé en ce qu'**une première rampe oblique (76) est prévue entre la première surface extérieure (50) et la première zone d'assemblage (58) pour assembler la première surface extérieure (50) avec la première zone d'assemblage (58), et une seconde rampe oblique (78) est prévue entre la seconde surface extérieure (62) et la seconde zone d'assemblage (64) pour assembler la seconde surface extérieure (62) avec la seconde zone d'assemblage (64).

3. Composant de paroi (40) selon l'une des revendications précédentes,
**caractérisé en ce que** le premier élément de paroi (42) et le second élément de paroi (44) ont une réalisation mutuelle symétrique.

4. Composant de paroi (40) selon l'une des revendications 2 et 3,
**caractérisé en ce que** l'élément de jointoiement (68) est réalisé sur une première zone de bordure (90) en complémentarité de la première rampe (76) et de la première zone d'assemblage (58) et, sur une seconde zone de bordure (90), en complémentarité de la seconde rampe (78) et de la seconde zone d'assemblage (64).

5. Composant de paroi (40) selon l'une des revendications précédentes,
**caractérisé en ce que** le premier élément de paroi (42) a une réalisation à double coque et présente au moins une première zone de paroi intérieure (80), et que le second élément de paroi (44) a une réalisation à double coque et présente une seconde zone de paroi intérieure (82), une structure de coeur d'appui (84) étant respectivement disposée entre la première zone de paroi extérieure (48) et la première zone de paroi intérieure (80) et entre la seconde zone de paroi extérieure (60) et la seconde zone de paroi intérieure (82).

6. Composant de paroi (40) selon la revendication 5,
**caractérisé en ce que** la première zone de paroi extérieure (48) et la première zone de paroi intérieure (80) sont agglomérées et/ou entrelacées sur la première zone d'assemblage (58) pour la formation monobloc de la première zone d'assemblage (58), et que la seconde zone de paroi extérieure (60) et la seconde zone de paroi intérieure (82) sont agglomérées et/ou entrelacées sur la seconde zone d'assemblage (64) pour la formation monobloc de la seconde zone d'assemblage (64).

7. Composant de paroi (40) selon l'une des revendications 5 et 6,
**caractérisé en ce qu'**une première rampe intérieure oblique (86) est prévue pour l'assemblage de la première zone d'assemblage (58) avec la première zone de paroi intérieure (80), et qu'une seconde rampe intérieure oblique (88) est prévue pour l'assemblage de la seconde zone d'assemblage (64) avec la seconde zone de paroi intérieure (82).

8. Composant de paroi (40) selon l'une des revendications précédentes,
**caractérisé en ce que** l'élément de jointoiement (68) est formé d'une seule pièce dans la technique de pultrusion.

9. Composant de paroi (40) selon l'une des revendications précédentes,
**caractérisé en ce que** l'élément de jointoiement (68) présente la zone de jointoiement (70) et une bride (92), qui s'étend en saillie à l'écart de la zone de jointoiement (70), sur le côté opposé de la surface extérieure (74) de la zone de jointoiement, ou que l'élément de jointoiement (68) présente plusieurs brides (92), qui s'étendent en saillie à l'écart de la zone de jointoiement (70), sur le côté opposé de la surface extérieure (74) de la zone de jointoiement, pour former un espace de réception (100) intermédiaire.

10. Fuselage d'aéronef, comprenant au moins un composant de paroi (40) selon l'une des revendications précédentes,
**caractérisé en ce que** des éléments de paroi (42, 44) de ce dernier sont assemblés avec les éléments de jointoiement (68) le long de joints longitudinaux, qui s'étendent dans la direction longitudinale du fuselage d'aéronef.

11. Fuselage d'aéronef (22) selon la revendication 10 avec un composant de paroi (40) selon la revendication 9,
**caractérisé en ce qu'**une structure de plancher (96) est fixée sur les brides (92), s'étendant vers l'intérieur, d'au moins deux éléments de jointoiement (68).

12. Procédé d'assemblage d'éléments de paroi (42, 44) en matériau renforcé par des fibres pour former une zone d'une paroi extérieure (54) d'un aéronef, comprenant les étapes :
a) réalisation d'une zone de bordure (56) d'un premier élément de paroi (42) en tant que première zone d'assemblage (58), de sorte que la première zone d'assemblage (58) est en déport par rapport à une première surface extérieure (50) formant la paroi extérieure (54),
b) réalisation d'une zone de bordure (56) d'un second élément de paroi (44) en tant que seconde zone d'assemblage (64), de sorte que la seconde zone d'assemblage (64) est en déport par rapport à une seconde surface extérieure (62) formant la paroi extérieure (54),
c) alignement mutuel de la première et de la seconde zone d'assemblage (58, 64), de sorte qu'il en résulte un creux (66), en déport par rapport à la première surface extérieure (50) et à la seconde surface extérieure (62), à l'emplacement de jointoiement (72) entre les éléments de paroi (42, 44) à assembler,
d) prévision d'un élément de jointoiement (68) monobloc avec une zone de jointoiement (70) ajustée dans le creux (66) de telle sorte qu'une surface extérieure (74) de la zone de jointoiement, réalisée pour former la zone de paroi extérieure (48, 60) de l'aéronef à l'emplacement de jointoiement (72), affleure, lors de la mise en place de la zone de jointoiement (70) dans le creux (66), avec la première surface extérieure (50) et la seconde surface extérieure (62), et
e) fixation de la première zone d'assemblage (58) et de la seconde zone d'assemblage (64) sur la zone de jointoiement (70).

13. Procédé selon la revendication 12,
l'étape a) présente l'étape
a1) réalisation d'une zone de bordure (56) d'un premier élément de paroi (42) en tant que première zone d'assemblage (58), de sorte que la première zone d'assemblage (58) est en déport par rapport à une première surface intérieure (83) formant la paroi intérieure (81),
et l'étape b) présente l'étape
b1) réalisation d'une zone de bordure (56) d'un second élément de paroi (44) en tant que seconde zone d'assemblage (64), de sorte que la seconde zone d'assemblage (64) est en déport par rapport à une seconde surface intérieure (85) formant la paroi intérieure (81).

14. Procédé selon la revendication 13,
les étapes a1) et b1) comprennent l'étape :
agglomération ou entrelacement de la première zone de paroi extérieure (48) avec la première surface intérieure (83) et de la seconde zone de paroi extérieure (60) avec la seconde surface intérieure (85).

15. Procédé de montagne d'un élément d'équipement intérieur (106) sur une zone d'un fuselage (22) d'un aéronef, formée par assemblage d'éléments de paroi (42, 44) par un procédé selon l'une des revendications 12 à 14,
l'étape d) renfermant l'étape d1a) : prévision d'une bride (92) s'étendant sur le côté opposé de la surface extérieure (74) de la zone de jointoiement, dans la direction orthogonale à la zone de jointoiement (70),
et une étape fa) : fixation d'une structure de plancher (96) sur la bride (92), dans lequel étant prévue
ou
l'étape d) renfermant l'étape d1b) : prévision d'au moins deux brides (92), s'étendant sur le côté opposé de la surface extérieure (74) de la zone de jointoiement, dans la direction orthogonale à la zone de jointoiement (70),
et l'étape
fb1) fixation de systèmes (102) dans un espace de réception (100) formé entre les deux brides (92),
et/ou l'étape
fb2) fixation de faisceaux de câbles (104) sur les deux brides (92) étant prévues.
